**Europäisches Patentamt**

**European Patent Office**

**Office européen des brevets**

(19)

(11) Veröffentlichungsnummer: **0 280 900**
**B1**

(12) **EUROPÄISCHE PATENTSCHRIFT**

(45) Veröffentlichungstag der Patentschrift:
**31.10.90**

(51) Int. Cl.⁵: **D01G 11/04**

(21) Anmeldenummer: **88101562.2**

(22) Anmeldetag: **04.02.88**

(54) Verfahren und Reissvorrichtung zur Herstellung von aufgelösten Faserwerkstoffen.

(30) Priorität: **05.02.87 DE 3703399**

(43) Veröffentlichungstag der Anmeldung:
**07.09.88 Patentblatt 88/36**

(45) Bekanntmachung des Hinweises auf die Patenterteilung:
**31.10.90 Patentblatt 90/44**

(84) Benannte Vertragsstaaten:
**DE ES FR GB IT**

(56) Entgegenhaltungen:
**DE-A- 2 605 328**
**DE-B- 1 256 118**
**FR-A- 1 190 115**
**GB-A- 2 142 351**
**US-A- 1 509 359**

(73) Patentinhaber: **AUTEFA MASCHINENFABRIK GMBH,**
**Röntgenstrasse 1 - 5, D-8904 Friedberg(DE)**

(72) Erfinder: **Hirschek, Herwig, Dipl.-Ing., Keplerstrasse 3a,**
**D-8903 Bobingen 1(DE)**
Erfinder: **Lang, Jürgen, Dipl.-Ing., Franz-Beer Strasse 4a,**
**D-8901 Gessertshausen(DE)**

(74) Vertreter: **Ernicke, Hans-Dieter, Dipl.-Ing. et al,**
**Schwibbogenplatz 2b, D-8900 Augsburg(DE)**

ACTORUM AG

# Beschreibung

Die Erfindung betrifft ein Verfahren und die zugehörige Reißvorrichtung zur Herstellung von aufgelösten Faserwerkstoffen aus festkörperverunreinigten textilen Abfällen, Altkleidern oder dergleichen.

Aus Mangel an Rohstoffen entsteht in vielen Ländern eine immer größere Nachfrage nach Recycling-Möglichkeiten für textile Abfälle, insbesondere Altkleider. Diese Materialen sollen zerkleinert und in ihrer Struktur soweit aufgelöst werden, daß nur noch lose zusammenhängende Fasern vorliegen, die dann einer weiteren Verarbeitung zu neuen Produkten zugeführt werden können.

Problematisch sind hierbei allerdings die vor allem bei Altkleidern vorliegenden Festkörperverunreinigungen. Dies sind zum einen kleinere Teile, wie Hemdenknöpfe, Nadeln, Reißverschlüsse etc., aber auch grobe Fremdkörper, wie Schnallen, große Mantelknöpfe oder dgl. Es muß auch mit einem eventuellen Tascheninhalt gerechnet werden. Diese Teile führen in Reißmaschinen zu Beschädigungen an den stufenweise immer feineren Reißwerkzeugen. Außerdem droht eine erhebliche Brandgefahr durch Funkenbildung zwischen metallischen, insbesondere eisenhaltigen Festkörpern und den Reißwerkzeugen. In der Praxis sind auch Staubexplosionen vorgekommen. Soweit kleinere Festkörper die Reißmaschine ohne Beschädigung passieren, stellen sie eine Verunreinigung des aufgelösten Faserwerkstoffes dar, die sich in der nachgeschalteten Verarbeitungsstation, beispielsweise einer Spinnmaschine, negativ auswirken. Selbst kleine Festkörper können in der Reißmaschine und den weiteren Verarbeitungsmaschinen zu extremen Schäden an den Maschinen selbst und zu wirtschaftlichen Einbußen durch Stillstand der ganzen Anlage führen.

Altkleider können damit erst verarbeitet werden, wenn die Festkörperverunreinigungen entfernt worden sind. Wird dies von Hand erledigt, ist diese Art des Recyclings nicht wirtschaftlich und damit praktisch nicht durchführbar.

Aus der DE-AS 1 510 320 ist eine einstufige Reißmaschine bekannt, in der verunreinigte Pitzen und lose Fremdkörper an der Reißtrommel abgeschieden und über eine Schlagvorrichtung geführt werden. Diese soll die Festkörper mechanisch abtrennen und über einen Rost abführen, während die Pitzen zur Eingabeseite zurückgeleitet werden. Die bekannte Reißmaschine stellt einen Feinreißer dar, der nur für geringfügig verunreinigte Lumpen, aber nicht für Altkleider geeignet ist. Grobe Festkörper, wie Schnallen oder dgl. führen bereits zu Schäden an den Stiften der Reißtrommel bevor sie abgeschieden werden können. Die Lumpen müssen daher von Hand vorsortiert und gereinigt werden.

Im weiteren ist auch aus der DE-OS 3 202 156 eine mehrstufige Reißmaschine mit Stifttrommeln bekannt, bei der an jeder Reißstufe Pitzen und Fremdkörper durch Schwerkraft abgeschieden und dann einer einstufigen Windsichtung unterworfen werden. Diese ist aus den gleichen Gründen wie der vorgenannte Stand der Technik ebenfalls für Altkleider nicht geeignet. Sie ist außerdem nicht wirtschaftlich und gewährleistet auch keine absolute Reinheit der aufgelösten Fasern. Die an der Reißtrommel abgeschiedenen Teile werden mit hoher Geschwindigkeit abwärts geschleudert. Im gezeigten Windsichtverfahren können dabei die Pitzen nicht zuverlässig von den losen Fremdkörper getrennt werden. Entweder entsteht ein zu hoher Pitzenausschuß oder die Fremdkörper werden zur Reißtrommel zurückgeführt und dabei immer weiter zerkleinert, bis sie doch mit den Fasern weitertransportiert werden.

Es ist daher Aufgabe der vorliegenden Erfindung, ein Verfahren und eine Vorrichtung zur automatischen, kostengünstigen und betriebssicheren Verarbeitung aller Arten von fremdstoffbelasteten Textilgütern aufzuzeigen.

Die Erfindung löst diese Aufgabe mit den Merkmalen im Kennzeichen des Verfahrens- und Vorrichtungshauptanspruchs.

Die Erfindung gestattet die Verarbeitung aller Arten von Textilien ohne manuelle Vorbereitung, d.h. Vorsortieren, Entfernen von Festkörpern, Reinigen oder dergleichen.

Das im ursprünglichen Zustand belassene und insoweit rohe Textilgut wird einem Grobreißer vorgelegt. Im Gegensatz zum Feinreißer führt der Grobreißer noch keine Faserauflösung durch, sondern zerkleinert das Textilgut zunächst in grobe Fetzen, wobei auch ein Großteil der groben Fremdkörper ohne Beschädigungsgefahr für den Grobreißer vom Textilgut abgetrennt wird. Das Reißgut wird dann komplett einem Abscheideprozeß unterworfen, bei dem lose Fremdkörper und eisenhaltige Teile abgesondert werden.

Im nachgeschalteten Feinreißer wird das Reißgut in mehreren Stufen mit zunehmendem Feinheitsgrad zerrissen und in Fasern aufgelöst. Hierbei gelingt es in der Regel nicht, das gesamte Gut gleichmäßig zu zerkleinern. Es bleiben größere Teile, beispielsweise in Form von kleinen Textilfetzen, Faserbüscheln oder Verfilzungen übrig, die auch Fremdkörper einhüllen können. Diese Reißprodukte, die nachfolgend als Pitzen bezeichnet werden, unterliegen vorzugsweise zwischen allen Reißstufen einem Abscheideprozeß.

Im Gegensatz zum Stand der Technik werden die Pitzen der jeweiligen Reißstufe, in der sie abgeschieden wurden, nicht direkt wieder zugeleitet. Erfindungsgemäß werden die Pitzen im Feinreißer gesammelt und gemeinsam einem weiteren Abscheideprozeß zugeführt. Dieser läßt sich sensibler auf Wichteunterschiede einstellen und ermöglicht auch eine Auflösung der Verfilzungen und eine Freigabe der Fremdkörper. Die isolierten Fremdkörper und die mit verhältnismäßig großen Fremdkörpern behafteten Pitzen können zuverlässig erkannt und abgesondert werden, während die sauberen und die im Abscheideprozeß gereinigten Pitzen wieder zur ersten Feinreißstufe gelangen.

Das erfindungsgemäße Verfahren verbindet damit eine sichere Abscheidung fester Fremdkörper mit einer optimalen Wirtschaftlichkeit und Ausnutzung des Textilgutes. Es werden nur diejenigen Pitzen vollends abgesondert, bei denen sich eine weitere Bearbeitung nicht lohnt.

Die primären und sekundären Abscheideprozesse werden mit besonderem Vorteil durch Windsichten ausgeführt. Hierbei können Windsichter in verschiedenen Ausführungsformen eingesetzt werden. Sie ergänzen sich mit der pneumatischen Fördervorrichtung, indem sie auch für eine Trennung der Transportluft von den Pitzen sorgen. Windsichter können entsprechend den gezeigten Ausführungsbeispielen in einfacher und praktischer Weise an die Eigenschaften der jeweils abzuscheidenden Pitzen angepaßt werden. Die Abscheideprozesse können aber auch in anderer Weise, beispielsweise durch Größenklassifizierung oder dergleichen, durchgeführt werden.

Für den sekundären Abscheideprozeß eignet sich besonders ein mehrstufiges Windsichten, insbesondere mit einem Zick-Zack-Sichter. Die Mehrstufigkeit sorgt für einen beruhigten Pitzentransport, wobei die Verfilzungen besonders gut aufgelöst werden. Beim Zick-Zack-Sichter ist auch die Trennsicherheit am größten.

Weitere vorteilhafte Ausgestaltungen der Erfindung sind in den Unteransprüchen angegeben.

Die Erfindung ist in den Zeichnungen beispielsweise und schematisch dargestellt. Im einzelnen zeigen

Fig. 1 den schematischen Aufbau der Reißvorrichtung,

Fig. 2 eine längsgeschnittene Detailansicht des Feinreißers von Fig. 1,

Fig. 3 einen detaillierten Querschnitt durch einen Windsichter gemäß Fig. 1 und

Fig. 4 eine schematische Detailansicht eines Zick-Zack-Sichters in Funktion.

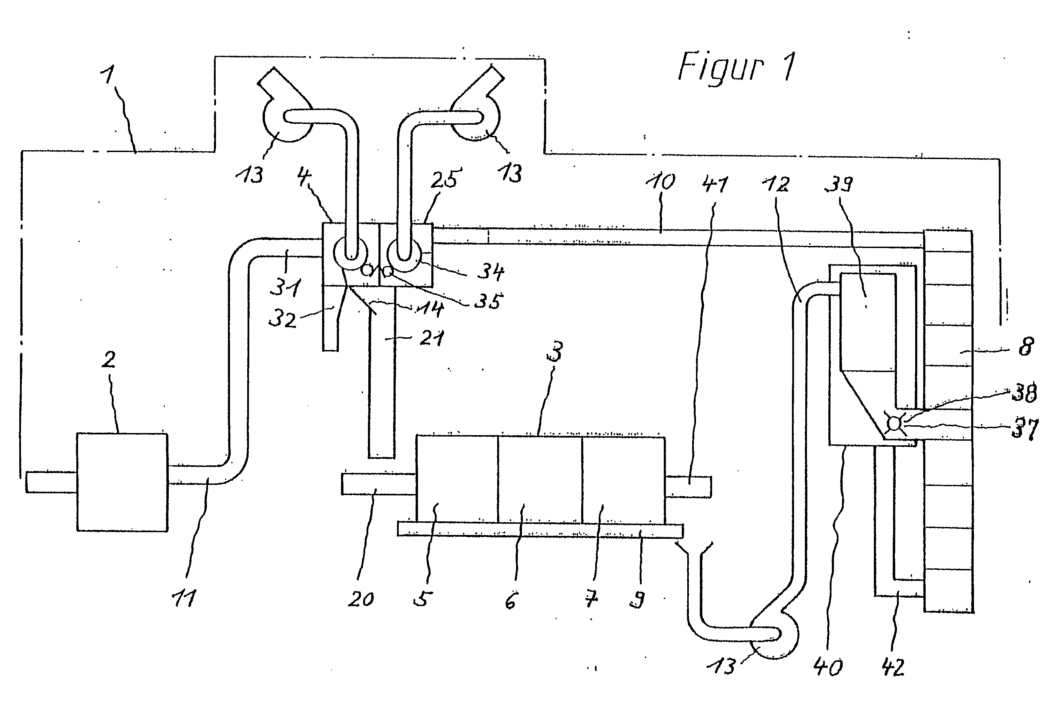

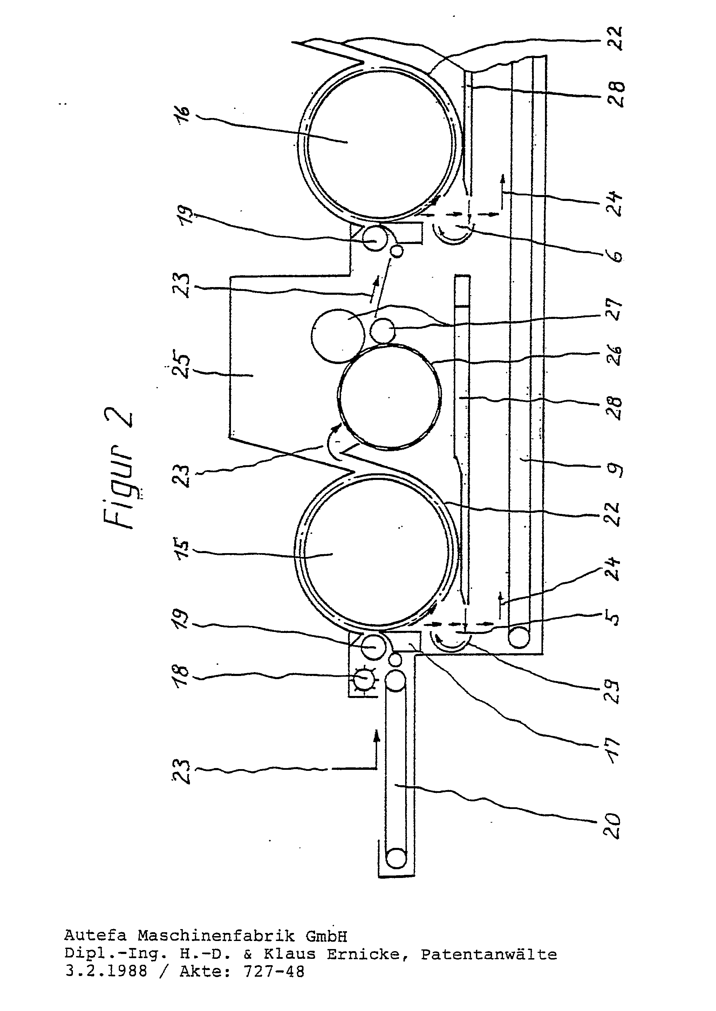

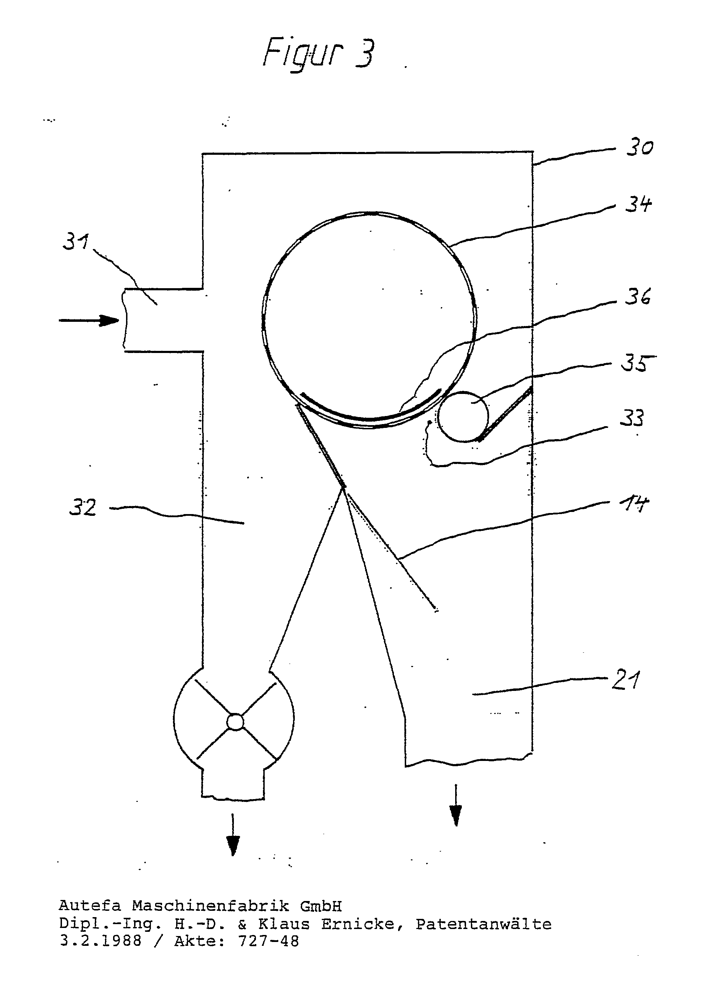

Fig. 1 zeigt in schematischer Darstellung eine Reißvorrichtung (1), in der mit festen Fremdkörpern verunreinigte Textilgüter jeglicher Art zu aufgelösten und sauberen Faserwerkstoffen verarbeitet werden können. Die Reißvorrichtung (1) beeinhaltet einen Grobreißer (2) und einen mehrstufigen Feinreißer (3), der in der gezeigten Ausführungsform drei Reißstufen aufweist. In Variation dazu können der Grobreißer (2) und der Feinreißer (3) noch weitere Stufen besitzen. Zwischen dem Grobreißer (2) und dem Feinreißer (3) sowie zwischen den einzelnen Feinreißstufen sind Abscheidevorrichtungen (4,5,6,7) (ugl. Fig 2 und 3) angeordnet. Den primären Abscheidevorrichtungen (5,6,7) im Bereich des Feinreißers (3) ist eine sekundäre Abscheidevorrichtung (8) nachgeordnet, die über eine Rückführung (10) wieder mit der Eingangsstufe des Feinreißers (3) verbunden ist.

Im Grobreißer (2) wird das rohe Textilgut in grobe Gewebefetzen zerteilt. Der Grobreißer (2) ist hierzu mit robusten Hakenzähnen ausgerüstet. Er kann auch als stabile Schneidvorrichtung ausgebildet sein.

Im nachgeordneten Feinreißer (3) werden diese Gewebefetzen mit zunehmendem Feinheitsgrad zerrissen. Am Ende des Feinreißers (3) kommen an der Abgabestelle (41) aufgelöste Faserbüschel heraus, die gesammelt und einer weiteren Verarbeitung, z.B in Spinnmaschinen, zugeführt werden. Der aufgelöste Faserwerkstoff ist frei von Festkörpern und sonstigen Verunreinigungen.

Fig. 2 zeigt in einem Teilabschnitt den inneren Aufbau eines Feinreißers (3). In der dargestellten Ausführungsform sind entsprechend der Reißstufenzahl mehrere Reißtrommeln (15,16) hintereinander angeordnet, die von Stufe zu Stufe feinere Reißwerkzeuge tragen. Die Reißwerkzeuge bestehen aus Stiften oder Nadeln, die gleichmäßig über den Trommelmantel verteilt sind.

Das vom Grobreißer (2) zugeführte Reißgut (23) wird nach Passieren der Abscheidevorrichtung (4) über einen Zulieferschacht (21) auf eine Eingabevorrichtung (20) in Form eines Förderbandes gebracht. Am Ende des Zulieferschachtes (21) sind Austragswalzen angeordnet, die für eine gleichmäßige Abfuhr sorgen. Auf dem Förderband wird das Reißgut (23) vor der Übergabe an die Maschine noch von einer Vorpreßwalze (18) verdichtet und dann über eine Förderwalze (19) der ersten Reißtrommel (15) zugeführt. Hierbei gelangt das Reißgut (23) in einen zwischen der Scherkante (17) und der Reißtrommel (15) gebildeten Spalt und wird zum überwiegenden Teil in kleinere Stücke zerrissen. Die Reißtrommel (15) fördert diese Reißteile im Bereich der Scherkante (17) abwärts, wodurch sie in den Wirkbereich einer Abscheidevorrichtung (5) gelangen, die als Trommelsichter ausgebildet ist.

Durch eine Luftleitung (28) und eine Umlenkung (29) wird Druckluft gegen den offenliegenden Trommelbereich zwischen einer unteren Abdeckwanne (22) und der Scherkante (17) geblasen. Die Richtung, die Geschwindigkeit und der Druck des Luftstromes sind dabei so bemessen, daß die leichteren Reißteile, die entweder keine oder nur sehr kleine Festkörper oder sonstige Verunreinigungen beeinhalten, gegen den Trommelmantel gepreßt werden, während die schwereren Teile nach unten auf eine Fördervorrichtung (9) fallen. Diese abgeschiedenen Teile sind beim Reißen abgetrennte lose Fremdkörper oder sogenannte Pitzen (24). Letztere sind entweder festkörperbehaftet oder besonders groß. Mit den Pitzen (24) werden bereits an der ersten Reißstufe (15) die meisten Fremdkörper abgeschieden.

Die leichteren Reißteile (23) werden von der Trommel (15) entlang der Abdeckwanne (22) weitertransportiert und über eine Abstreifkante auf eine Siebtrommel (26) gefördert, von der sie mittels einer weiteren Austragsvorrichtung (27) der nächsten Reißstufe zugeführt werden. Die Siebtrommel (26) ist Bestandteil eines Kondensers (25), der mit einem Ventilator (13) zusammenwirkt. Durch die Siebtrommel (26) wird dabei die Förderluft von der Reißteilbahn (23) abgesaugt und zumindest teilweise über einen Bypass wieder in die Luftleitung (28) zum Trommelsichter (5) zurückgeführt.

Die nächste Reißstufe mit der Reißtrommel (16) zerteilt das Reißgut (23) in noch kleinere Stücke. Durch einen weiteren Trommelsichter (6) werden wiederum die schwereren Pitzen (24) von den leichteren Reißteilen (23) getrennt. Die Trommelsichter (5,6) sind zwar baugleich, wegen der geringeren Größe und des niedrigeren Gewichtes der Pitzen sind jedoch die Strömungsbedingungen des Trommelsichters (6) geändert. Die nachfolgenden Reißstufen sind in gleicher Weise ausgebildet und der veränderten Pitzengröße angepaßt.

Die Fördervorrichtung (9) erstreckt sich durchgehend unterhalb der verschiedenen Reißstufen und befördert alle abgeschiedenen Pitzen (24) in einen Sammelschacht, von dem sie über eine pneumatische Fördervorrichtung (12) mit einem Ventilator (13) zu einer nachgeordneten Abscheidevorrichtung (8) transportiert werden.

An den Reißstufen wird eine Grobunterscheidung getroffen, wobei alle schwereren Teile abgeschieden werden ohne Rücksicht darauf, ob es sich um Fremdkörper oder um gutes und nur verhältnismäßig großes Material handelt. In der nachgeordneten Abscheidevorrichtung kann eine sensiblere Unterscheidung unter diesen Teilen getroffen werden. Die losen Festkörper und die verunreinigten kleinen Pitzen, bei denen sich durch den geringen Gewebeanteil keine weitere Bearbeitung lohnt, werden ausgeschieden. Die sauberen und die nur geringfügig verunreinigten großen Pitzen werden hingegen über eine Rückführung (10) pneumatisch zu einem Kondenser (25) transportiert. Hier wird mittels eines Ventilators (13) mit nachgeschalteter Filteranlage die Förderluft von den Pitzen getrennt und letztere wieder über den Zulieferschacht (21) der Eingabevorrichtung (20) des Feinreißers (3) zugeführt. Der Kondenser (25) besitzt eine Siebwalze (34) und eine Abstreifwalze (35) und ist insofern ähnlich wie die nachstehend beschriebene Abscheidevorrichtung (4) aufgebaut.

Im Grobreißer (2) wird das rohe Textilgut zerkleinert, wobei bereits ein Großteil der Festkörper, wie Knöpfe, Schnallen usw. abgetrennt werden. Über eine pneumatische Fördervorrichtung (11) gelangt das gröb zerkleinerte Reißgut zu einer Abscheidevorrichtung (4), in der vor allem die abgerissenen Festkörper und die mit besonders schweren Festkörpern behafteten Gewebefetzen abgeschieden werden. Die leichteren Fetzen, die ihrerseits noch Festkörper beeinhalten können, werden hingegen weitertransportiert und über den Zulieferschacht (21) dem Feinreißer (3) zugeführt.

Fig. (3) zeigt die als Windsichter ausgebildete Abscheidevorrichtung (4) in vergrößerter Ansicht. Im Windsichter (4) werden einerseits die Festkörper abgeschieden und andererseits die Förderluft aus der pneumatischen Fördervorrichtung (11) über eine Saugquelle (13) in Form eines Ventilators oder dergleichen abgeführt. Der Windsichter (4) weist ein luftdichtes Gehäuse (30) auf, in den das Reißgut über einen vorzugsweise seitlich angeordneten Zuführschacht (31) eintritt. Innerhalb des Gehäuses (30) ist eine Siebwalze (34) etwa in Höhe und mit etwas Abstand zum Zuführschacht (31) angeordnet. Die Siebwalze (34) ist drehbar gelagert und angetrieben. Sie beinhaltet an ihrer Unterseite in dichtender Anlage eine Wanne (36). Die Siebwalze (34) ist an die Saugquelle (13) angeschlossen, wodurch im Gehäuse (30) Luft durch ihren gelochten Mantel von außen nach innen abgesaugt werden kann.

In Zuführrichtung vor der Siebwalze (34) ist im Boden des Gehäuses (30) ein vertikaler Fallschacht (32) angeordnet, der in seinem unteren Bereich luftdicht durch eine Zellenradschleuse oder ein ähnliches Förder- und Sperrorgan abgeschlossen ist. Durch den Fallschacht (32) werden die abgeschiedenen Teile abgeführt. In Zuführrichtung hinter der Siebwalze (34) ist ein Auslaß (33) für die weiterzufördernden Gewebefetzen angeordnet. Darin ist in dichtender Lage eine Abstreifwalze (35) angeordnet, die schneller und gegensinnig zur Siebwalze (34) rotiert. Durch diese Anordnung werden die Gewebefetzen von der Siebwalze (34) abgenommen und durch den Auslaß (33) in den Zulieferschacht (21) befördert. Durch die abdichtende Wirkung der Abstreifwalze (35) wird außerdem die Zufuhr von Außenluft unterbunden.

Pneumatisch gefördert gelangt das grob zerkleinerte Reißgut durch den Zuführschacht (31) in das Gehäuse (30) und prallt auf die Siebwalze (34). Die Siebwalze (34) gestattet eine exakte Trennung der für eine Weiterbearbeitung geeigneten Gewebeteile von den Abfallteilen. Durch den Unterdruck in der Siebwalze (34) haften nur die verhältnismäßig großflächigen und elastischen anschmiegfähigen Gewebefetzen auf dem gewölbten Walzenmantel und werden zur Abstreifwalze (35) transportiert. Die Siebwalze (34) rotiert hierbei mit ihrem offenen Bereich in Zuführrichtung vom Fallschacht (32) zum Auslaß (33). Die abgerissenen Festkörper sind meist zu klein und zu schwer, um auf der Siebwalze (34) zu haften. Auch großflächige und verhältnismäßig leichte, aber steife Teile bleiben nicht haften, da sie keine ausreichend große Fläche auf der Siebtrommel abdecken. Diese Teile prallen vom Walzenmantel zurück und fallen in den Fallschacht (32). Gleiches geschieht mit den festkörperbehafteten Fetzen, die zu schwer sind, um auf der Siebwalze (34) zu haften.

Die abgeschiedenen Festkörper und Gewebefetzen werden im gezeigten Ausführungsbeispiel entfernt. Es könnte sich aber auch ein weiterer sekundärer Abscheideprozeß anschließen, in dem die Gewebefetzen von den losen Festkörpern getrennt und dem Grobreißer (2) wieder zugeführt werden.

Aus dem Auslaß (33) gelangen die weiterzufördernden Gewebefetzen auf einen Magnetabscheider (14), der unterschiedlich, beispielsweise als Trommelabscheider oder wie in Fig 1 als schräge Rutsche ausgebildet sein kann. Die Gewebefetzen kommen im freien Fall auf den Magnetabscheider (14) und rutschen weiter in den Zulieferschacht (21). Von den langsam abgleitenden Gewebefetzen können dadurch mit großer Sicherheit diejenigen mit eisenhaltigen Fremdkörpern zurückgehalten werden. Vor allem die Eisenteile verursachen in den Reißstufen unerwünschte Funkenbildung.

Im Ausführungsbeispiel der Fig. 1 ist die sekundäre Abscheidevorrichtung (8) als mehrstufiger Windsichter, insbesondere als Zick-Zack-Sichter ausgebildet. Die Mehrstufigkeit ist über die Zick-Zack-Bahn gegeben, in der das aufgegebene Material immer wieder anderen Sichtbedingungen unterworfen ist. Im Gegensatz zu einer einstufigen Sichtung steht auch genügend Zeit für eine Trennung und Absonderung des Abfalls zur Verfügung.

Über die pneumatische Fördervorrichtung (12) werden die im Feinreißer (3) abgeschiedenen Teile in einen Luftfiltersack (39) transportiert, in dem die Förderluft von den Teilen getrennt wird. Letztere fallen dann in den Eingabetrichter des Windsichters (8), in dessen Zuführöffnung eine luftdichte Fördervorrichtung (37) angeordnet ist. Diese sperrt einerseits die Förderluft aus und schleudert andererseits die Teile in den Zick-Zack-Kanal des Windsichters. In der gezeigten Ausführngsform kommt hierfür eine Zellenschleuderwalze (38) zum Einsatz, von deren Flügeln stets mindestens zwei den Zuführkanal abdichten. Alternativ können auch eine abgedichtete Schieberschleuse oder eine entsprechende Walzenpaarung verwendet werden.

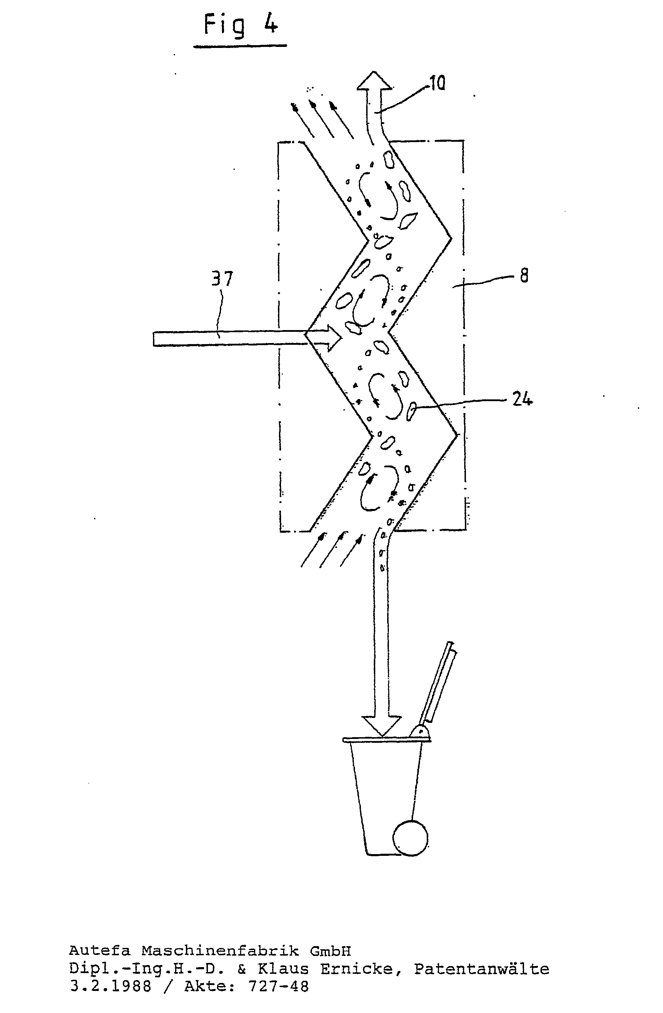

Wie Fig 4 verdeutlicht, streicht im Windsichter (8) eine Luftströmung von unten nach oben durch den Zick-Zack-Kanal. Im Luftstrom herrschen Turbulenzen und abschnittsweise gegenläufig drehende Wirbel, in denen das durch die Fördervorrichtung (37) eingebrachte Material verwirbelt wird. Hierbei werden zusammengeballte Pitzen geöffnet, wobei ihre Oberfläche vergrößert wird und außerdem in Fasern anhaftende oder in Verfilzungen eingeschlossene Fremdkörper freigelegt werden.

Der Luftstrom nimmt auf seiner jeweiligen Druckseite die Teile mit nach oben, die eine geringe Wichte, d.h. ein verglichen mit der Oberfläche geringes Gewicht aufweisen. Dadurch wandern die brauchbaren Pitzen mit ausreichend großem Gewebeanteil nach oben, wenn diese in den Kanal geschleudert werden oder wenn sie von einer schrägen Kanalwand abwärts rutschen und über die Kanalöffnung auf die nächste untere in Gegenrichtung verlaufende Kanalwand stürzen. Auf der anderen Seite rutschen hingegen die freigelegten Fremdkörper und die unbrauchbaren Pitzen mit zu geringem Gewebeanteil nach unten.

Der seitliche Zuführkanal für das Reißgut mündet etwa in halber Höhe in den Zick-Zack-Kanal, wobei die vorbeschriebenen Sichtvorgänge oberhalb und unterhalb dieser Stelle stattfinden. Bei diesem mehrstufigen Sichtprozeß werden diejenigen Pitzen aussortiert, die keine oder vergleichsweise nur geringe Festkörperverunreinigungen aufweisen und die lediglich durch ihre Größe in den primären Abscheidevorrichtungen (5,6,7) ausgeschieden wurden. Diese Pitzen gelangen in der vorbeschriebenen Weise über die Rückführung (10) wieder zur ersten Stufe des Feinreißers (3). Die anderen Pitzen, die eine relativ geringe Größe und dabei durch Festkörper ein relativ hohes Gewicht aufweisen, fallen im Windsichter (8) aus, genauso wie die abgerissenen losen Festkörper. Auf diese Weise werden nur diejenigen Pitzen in den Reißprozeß zurückgefördert, bei denen sich eine erneute Bearbeitung lohnt.

Im gezeigten Ausführungsbeispiel wird der Windsichter (8) auch mit der pneumatischen Fördervorrichtung (12) zu einem energiegünstigen geschlossenen Strömungssystem gekoppelt. Der Luftfiltersack (39) ist hierzu von einem dichten Luftfiltergehäuse (40) umgeben, von dem aus die abgeschiedene Förderluft über einen Kanal (42) von unten wieder durch den Windsichter (8) geführt werden kann. Im Luftfiltergehäuse (40) kann auch über einen Zyklon oder dgl. eine erste Staubabscheidung erfolgen. Für den nötigen Über- bzw. Unterdruck sorgen die Ventilatoren (13) in der pneumatischen Fördervorrichtung (12) und der Rückführung (10). Anstelle der Ventilatoren (13) können auch andere Saug- oder Druckquellen zum Einsatz gelangen.

Variationen der gezeigten Ausführungsförm sind in unterschiedlicher Weise und in beliebiger Kombination möglich. Zum einen kann der Grobreißer mehrere Stufen aufweisen und nach einem anderen Konstruktionsprinzip, beispielsweise als Schneidevorrichtung, aufgebaut sein. Gleiches gilt auch für den Feinreißer, der konstruktiv anders gestaltete Reißwerkzeuge besitzen kann. Die Windsichter (4,8) können gegeneinander ausgetauscht und auch durch andere Konstruktionen, beispielsweise einen Zyklon oder dergleichen ersetzt werden. Die gezeigte Ausführungsform hat allerdings den Vorteil, daß hier die Windsichter mit optimalem Wirkungsgrad eingesetzt werden. Der Windsichter (4) mit Siebwalze ist für eine gröbere Abscheidung von vergleichsweise großen und schweren Reißteilen geeignet, während der Zick-Zack-Sichter (8) für feinere Abscheideprozesse gedacht ist.

**Stückliste**

(1) Reißvorrichtung
(2) Grobreißer
(3) Feinreißer
(4) Abscheidevorrichtung, Windsichter
(5) Abscheidevorrichtung, Trommelsichter
(6) Abscheidevorrichtung, Trommelsichter
(7) Abscheidevorrichtung, Trommelsichter
(8) Abscheidevorrichtung, Windsichter, Zick-Zack-Sichter
(9) Fördervorrichtung
(10) Rückführung
(11) pneumatische Fördervorrichtung
(12) pneumatische Fördervorrichtung
(13) Ventilator, Saugquelle, Druckquelle
(14) Magnetabscheider, Rutsche
(15) Reißtrommel, erste Reißstufe
(16) Reißtrommel, zweite Reißstufe
(17) Scherkante
(18) Vorpreßwalze
(19) Förderwalze
(20) Eingabevorrichtung, Förderband
(21) Lieferschacht
(22) Abdeckwanne
(23) Reißgut, Reißteile
(24) Pitzen
(25) Kondenser
(26) Siebtrommel
(27) Austragsvorrichtung
(28) Luftleitung
(29) Umlenkung
(30) Gehäuse
(31) Zuführschacht
(32) Fallschacht
(33) Auslaß
(34) Siebwalze
(35) Abstreifwalze
(36) Wanne

(37) Fördervorrichtung
(38) Zellenschleuderwalze
(39) Luftfiltersack
(40) Luftfiltergehäuse
(41) Abgabestelle
(42) Kanal

**Patentansprüche**

1.) Verfahren zur Herstellung von aufgelösten Faserwerkstoffen aus festkörperverunreinigten textilen Abfällen, Altkleidern oder dergleichen, dadurch **gekennzeichnet**, daß das rohe Textilgut zuerst in einer Grobreißstufe in grobe Fetzen zerkleinert und anschließend einem Abscheideprozeß zum Entfernen loser Festkörper und Eisenteile unterworfen wird, und daß anschließend das Reißgut in mehreren Feinreißstufen mit zunehmendem Feinheitsgrad zerrissen wird, wobei zwischen den einzelnen Reißstufen die schwereren Pitzen und Festkörper abgesondert und gemeinsam einem weiteren Abscheideprozeß zugeführt werden, wo die Pitzen von den Festkörpern getrennt und in die erste Feinreißstufe zurückgeführt werden.

2.) Verfahren nach Anspruch 1, dadurch **gekennzeichnet**, daß die Abscheideprozesse mittels Windsichten durchgeführt werden, wobei das Textilgut und däs Reißgut pneumatisch gefördert werden.

3.) Verfahren nach Anspruch 1 oder 2, dadurch **gekennzeichnet**, daß im zweiten Abscheideprozeß die Pitzen durch mehrstufiges Windsichten von den Festkörpern getrennt werden.

4.) Verfahren nach Anspruch 1, dadurch **gekennzeichnet**, daß beim Abscheideprozeß nach der Grobreißstufe die eisenhaltigen Teile magnetisch abgesondert werden.

5.) Reißvorrichtung zur Durchführung des Verfahrens nach Anspruch 1 oder einem der folgenden, dadurch **gekennzeichnet**, daß die Reißvorrichtung (1) mindestens einen Grobreißer (2) und einen mehrstufigen Feinreißer (3) aufweist, wobei zwischen Grobreißer (2) und Feinreißer (3) eine Abscheidevorrichtung (4) mit Magnetabscheider (14) vorgesehen ist, und daß zwischen den einzelnen Feinreißstufen interne Abscheidevorrichtungen (5,6,7) angeordnet sind, die mit einer weiteren externen Abscheidevorrichtung (8) verbunden sind, die eine Rückführung (10) zum Eingang des Feinreißers (3) aufweist.

6.) Reißvorrichtung nach Anspruch 5, dadurch **gekennzeichnet**, daß im Feinreißer (3) eine Fördervorrichtung (9) angeordnet ist, auf der die in den verschiedenen Reißstufen intern abgeschiedenen Teile gesammelt und der externen Abscheidevorrichtung (8) zugeführt werden.

7.) Reißvorrichtung nach Anspruch 5 oder 6, dadurch **gekennzeichnet**, daß die Abscheidevorrichtungen (4,5,6,7,8) als Windsichter ausgebildet sind.

8.) Reißvorrichtung nach Anspruch 7, dadurch **gekennzeichnet**, daß der Grobreißer (2) mit dem Feinreißer (3) und die Windsichter (4,5,6,7,8) untereinander durch eine pneumatische Fördervorrichtung (11,12) verbunden sind.

9.) Reißvorrichtung nach Anspruch 7 oder 8, dadurch **gekennzeichnet,** daß der Windsichter (8) als Zick-Zack-Sichter ausgebildet ist und an der Einlaßseite eine abgedichtete Fördervorrichtung (37) aufweist über der ein Luftfiltersack (39) zum Abführren der Förderluft angeordnet ist.

10.) Reißvorrichtung nach Anspruch 9, dadurch **gekennzeichnet** , daß der Luftfiltersack (39) in einem abgedichteten Luftfiltergehäuse (40) angeordnet ist, das über einen Kanal (42) mit dem Windsichter (8) verbunden ist.

11.) Reißvorrichtung nach Anspruch 9, dadurch **gekennzeichnet** , daß die Fördervorrichtung (37) als abgedichtete Zellenschleuderwalze (38) ausgebildet ist.

12.) Reißvorrichtung nach Anspruch 7 oder 8, dadurch **gekennzeichnet** , daß der Windsichter (4) zwischen Grobreißer (2) und Feinreißer (3) ein luftdichtes Gehäuse (30) mit einem Zuführschacht (31), einem Fallschacht (32) für die Schwerteile und einem Auslaß (33) für das Reißgut aufweist, wobei zwischen Fallschacht (32) und Auslaß (33) eine rotierend angetriebene und mit einer Saugquelle (13) verbundene Siebwalze (34) angeordnet ist, die eine glatte Oberfläche besitzt und mit einer schneller laufenden Abstreifwalze (35) im Auslaß (33) kämmt.

13.) Reißvorrichtung nach Anspruch 12, dadurch **gekennzeichnet** , daß der Zuführschacht (31) seitlich am Gehäuse (30) angeordnet und auf die Siebwalze (34) gerichtet ist, wobei der Fallschacht (32) in Zuführrichtung vor und der Auslaß (33) hinter der Siebwalze (34) im Gehäuseboden angeordnet ist.

14.) Reißvorrichtung nach Anspruch 12 oder 13, dadurch **gekennzeichnet** , daß die Siebwalze (34 zwischen Fallschacht (32) und Auslaß (33) von einer dichtenden Wanne (36) abgedeckt ist und bezogen auf ihren freien Bereich in der Zuführrichtung rotiert.

**Revendications**

1. Procédé de production de matières fibreuses désintégrées, à partir de chutes de matières textiles souillées par des corps solides, de vieux habits ou de produits analogues, caractérisé en ce qu'il consiste à fragmenter le produit textile brut d'abord dans un stade d'effilochage grossier, en lambeaux grossier et, ensuite, à le soumettre à un processus de séparation pour éliminer les corps solides détachés et les parties ferreuses, et ensuite à effilocher le produit a effilocher dans plusieurs étages d'effilochage fin ayant un degré de, finesse croissant en séparant, entre les stades d'effilochage, les rebuts les plus lourds et les corps solides et en les envoyant ensemble à un autre processus de séparation où les rebuts sont séparés des corps solides et sont retournés au premier stade d'effilochage fin.

2. Procédé suivant la revendication 1, caractérisé en ce qu'il consiste à effectuer les processus de séparation au moyen d'une séparation pneumatique, le produit textile et le produit à effilocher étant transportés pneumatiquement.

3. Procédé suivant la revendication 1 ou 2, caractérisé en ce qu'il consiste à séparer les rebuts des corps solides dans le deuxième processus de séparation, par une séparation pneumatique à plusieurs stades.

4. Procédé suivant la revendication 1, caractérisé en ce qu'il consiste, dans le processus de séparation, a séparer magnétiquement les parties ferreuses après le stade d'effilochage grossier.

5. Dispositif d'effilochage pour la mise en œuvre du procédé suivant la revendication 1 ou l'une des suivantes, caractérisé en ce que le dispositif d'effilochage (1) comporte au moins un dispositif d'effilochage grossier (2) et un dispositif d'effilochage fin (3) à plusieurs étages, un dispositif de séparation (4) à séparateur magnétique (14) étant prévu entre le dispositif d'effilochage grossier (2) et le dispositif d'effilochage (3), et en ce qu'il est prévu, entre les étages d'effilochage fin, des dispositifs internes de séparation (5, 6, 7) qui sont reliés à un autre dispositif de séparation (8) extérieur comportant un conduit de recyclage (10) à l'entrée du dispositif d'effilochage fin (3).

6. Dispositif d'effilochage suivant la revendication 5, caractérisé en ce qu'il est prévu, dans le dispositif d'effilochage fin (3), un dispositif de transport (9) sur lequel les parties séparées à l'intérieur dans les étages d'effilochage sont rassemblées et sont envoyées au dispositif de séparation (8) extérieur.

7. Dispositif d'effilochage suivant la revendication 5 ou 6, caractérisé en ce que les dispositifs de séparation (4, 5, 6, 7, 8) sont constitués en séparateurs pneumatiques.

8. Dispositif d'effilochage suivant la revendication 7, caractérisé en ce que le dispositif d'effilochage grossier (2) communique avec le dispositif d'effilochage fin (3) et les séparateurs pneumatiques (4, 5, 6, 7, 8) communiquent entre eux par un dispositif de transport (11, 12) pneumatique.

9. Dispositif d'effilochage suivant les revendications 7 et 8, caractérisé en ce que le séparateur pneumatique (8) est constitué en séparateur en zigzag et comporte, du côté de l'entrée, un dispositif de transport (37) étanche au dessus duquel est disposé un sac de filtration d'air (39) pour évacuer l'air de transport.

10. Dispositif d'effilochage suivant la revendication 9, caractérisé en ce que le sac de filtration d'air (39) est disposé dans une enveloppe de filtre à air (40) étanche qui communique, par un canal (42), avec le séparateur pneumatique (8).

11. Dispositif d'effilochage suivant la revendication 9, caractérisé en ce que le dispositif de transport (37) est constitué sous la forme d'un rouleau de centrifugation cellulaire (38) étanche.

12. Dispositif d'effilochage suivant les revendications 7 ou 8, caractérisé en ce que le séparateur pneumatique (4) comporte, entre le dispositif d'effilochage grossier (2) et le dispositif d'effilochage fin (3), une enveloppe (30) étanche à l'air et ayant un puits d'amenée (31), un puits de descente (32) pour les fragments lourds et une sortie (33) pour le produit à effilocher, un rouleau de criblage (34) entraîné en rotation et communiquant avec une source d'aspiration (33) étant interposé entre le puits de descente (32) et la sortie (33), ayant une surface lisse et venant en prise avec un rouleau de raclage (35) tournant rapidement et monté dans la sortie (33).

13. Dispositif d'effilochage suivant la revendication 12, caractérisé en ce que le puits d'amenée (31) est disposé latéralement sur l'enveloppe (30) et est dirigé sur le rouleau de criblage (34), le puits de descente (32) étant disposé au fond de l'enveloppe en amont, dans le sens d'amenée, et la sortie (33) en aval du rouleau de criblage (34).

14. Dispositif d'effilochage suivant la revendication 12 ou 13, caractérisé en ce que le rouleau de criblage (34) est recouvert, entre le puits de descente (32) et la sortie (33), d'une cuvette (36) étanche et tourne, par rapport à sa partie dégagée, dans le sens d'amenée.

## Claims

1. Method for producing disintegrated fibre materials from textile waste material, old clothes or the like contaminated with solids, characterised in that the raw textile material is first of all broken up into coarse rags in a coarse tearing stage and then subjected to a separating process for removing loose solids and iron parts and that then the material to be torn is torn in several fine tearing stages with an increasing degree of fineness, between the individual tearing stages the heavier debris and solids being removed and supplied collectively to a further separating process, where the debris is separated from the solids and returned to the first fine tearing stage.

2. Method according to Claim 1, characterised in that the separating processes are carried out by means of air sifting, the textile material and the material to be torn being conveyed pneumatically.

3. Method according to Claim 1 or 2, characterised in that in the second separating process the debris is separated from the solids by multi-stage air sifting.

4. Method according to Claim 1, characterised in that at the time of the separating process, after the coarse tearing stage, the parts containing iron are separated magnetically.

5. Tearing apparatus for carrying out the method according to Claim 1 or one of the following, characterised in that the tearing apparatus (1) comprises at least one coarse tearer (2) and one multi-stage fine tearer (3), a separating device (4) with magnetic separator (14) being provided between the coarse tearer (2) and fine tearer (3) and that located between the individual fine tearing stages are internal separating devices (5, 6, 7), which are connected to a further external separating device (8), which has a return (10) to the inlet of the fine tearer (3).

6. Tearing apparatus according to Claim 5, characterised in that located in the fine tearer (3) is a conveying device (9), on which the parts separated internally in the various tearing stages are collected and supplied to the external separating device (8).

7. Tearing apparatus according to Claim 5 or 6, characterised in that the separating devices (4, 5, 6, 7, 8) are constructed as air sifters.

8. Tearing apparatus according to Claim 7, characterised in that the coarse tearer (2) with the fine tearer (3) and the air sifters (4, 5, 6, 7, 8) are connected to each other by a pneumatic conveying device (11, 12).

9. Tearing apparatus according to Claim 7 or 8, characterised in that the air sifter (8) is constructed as a zig-zag sifter and at the inlet side comprises a sealed conveying device (37), above which an air filter bag (39) for discharging conveying air is located.

10. Tearing apparatus according to Claim 9, characterised in that the air filter bag (39) is located in a sealed air filter housing (40), which is connected by way of a channel (42) to the air sifter (8).

11. Tearing apparatus according to Claim 9, characterised in that the conveying device (37) is constructed as a sealed cellular centrifugal drum (38).

12. Tearing apparatus according to Claim 7 or 8, characterised in that between the coarse tearer (2) and fine tearer (3), the air sifter (4) has an air-tight housing (30) with a supply chute (31), a drop chute (32) for the heavy parts and an outlet (32) for the material to be torn, a screening roller (34) driven in a rotary manner and connected to a suction source (13) being located between the drop chute (32) and outlet (33), which roller has a smooth surface and meshes with a doctor roll (35) rotating at a higher speed in the outlet (33).

13. Tearing apparatus according to Claim 12, characterised in that the supply chute (31) is located on the side of the housing (30) and is aligned with the screening roller (34), the drop chute (32) being located in front of the screening roller (34) in the supply direction and the outlet (33) being located behind the screening roller (34) in the base of the housing.

14. Tearing apparatus according to Claim 12 or 13, characterised in that between the drop chute (32) and outlet (33) the screening roller (34) is covered by a sealing through (36) and with respect to its free region rotates in the supply direction.

Figur 1

EP 0 280 900 B1

# Figur 2

Autefa Maschinenfabrik GmbH
Dipl.-Ing. H.-D. & Klaus Ernicke, Patentanwälte
3.2.1988 / Akte: 727-48

# Figur 3

30
34
31
36
35
33
32
14
21

Autefa Maschinenfabrik GmbH
Dipl.-Ing. H.-D. & Klaus Ernicke, Patentanwälte
3.2.1988 / Akte: 727-48

# Fig 4

Autefa Maschinenfabrik GmbH
Dipl.-Ing.H.-D. & Klaus Ernicke, Patentanwälte
3.2.1988 / Akte: 727-48